Europäisches Patentamt

European Patent Office

Office européen des brevets

(19)

(11) Numéro de publication: **0 115 732**
A2

## (12) DEMANDE DE BREVET EUROPEEN

(21) Numéro de dépôt: 83402536.3

(22) Date de dépôt: 27.12.83

(51) Int. Cl.³: **B 65 D 90/04,** B 29 C 27/14, E 04 F 13/08

(30) Priorité: 06.01.83 FR 8300138

(43) Date de publication de la demande: 15.08.84
Bulletin 84/33

(84) Etats contractants désignés: AT BE CH DE GB IT LI LU NL SE

(71) Demandeur: Société COOPETANCHE, Rue du Bois Raffeteau, F-77181 Courtry (FR)

(72) Inventeur: Renaud, Alain, 18, Sente du Pin, F-93370 Montfermeil (FR)

(74) Mandataire: Morash, Daniel, 17, Avenue La Bruyère, F-78160 Marly-le-Roi (FR)

(54) Procédé de garnissage intérieur d'un réservoir et réservoirs ainsi réalisés.

(57) Procédé de garnissage intérieur d'un réservoir pouvant comporter un couvercle, remarquable en ce qu'il comprend les étapes suivantes:

(i) – facultativement, la (ou les) paroi(s) intérieur(es) et le fond du réservoir sont au moins partiellement nettoyés;

(ii) – des premières bandes ayant une largeur (l) relativement faible sont reliées fixes à la paroi intérieure ainsi qu'au fond du réservoir;

(iii) – des deuxièmes bandes souples et au moins faiblement élastiques ayant une largeur (L) relativement grande sont reliées fixes, de façon étanche, par l'une de leurs extrémités latérales sur une des premières bandes susmentionnées et par l'autre de leurs extrémités latérales sur la suivante desdites premières bandes, un espace restant libre entre chacune desdites deuxièmes bandes et la paroi intérieure du réservoir;

(iv) – au moins une feuille souple et faiblement élastique est reliée fixe, de façon étanche, sur lesdites deuxièmes bandes, une liaison étanche étant réalisée pour au moins deux feuilles adjacentes;

(v) – lesdits espaces libres entre lesdites feuilles et la paroi sont pourvus à l'extrémité supérieure de la (des) paroi(s) du réservoir d'un joint étanche, des évents étant prévus dans ledit joint.

## PROCEDE DE GARNISSAGE INTERIEUR D'UN RESERVOIR ET RESERVOIRS AINSI REALISES

La présente invention concerne un procédé de garnissage intérieur d'un réservoir, par exemple avarié, qui peut comporter un nouvercle. Ce procédé peut être utilisé pour garnir des réservoirs en matière synthétique ou en matière céramique, par exemple . Cette invention concerne également les réservoirs réalisés pourvus d'un garnissage intérieur appliqué selon ce procédé.

Conformément à l'invention, le procédé de garnissage intérieur d'un réservoir pouvant comporter un couvercle est caractérisé en ce qu'il comprend les étapes suivantes :

(i) - facultativement, la (ou les) paroi(s) intérieure (s) et le fond du réservoir sont au moins partiellement nettoyés ;

(ii)- des premières bandes ayant une largeur (ℓ) relativement faible sont reliées fixes et, éventuellement, de façon étanche, à la paroi intérieure,- dans le cas d'un réservoir ovale ou circulaire,- à des distances sensiblement égales, ainsi qu'au fond du réservoir où lesdites bandes convergent radialement vers le centre dudit fond, et, - dans le cas d'un réservoir rectangulaire ou carré, lesdites premières bandes sont reliées fixes en continu sur deux parois opposées et sur le fond à des distances sensiblement égales, et sur les deux autres parois opposées à des distances sensiblement égales de l'extrémité supérieure du réservoir jusqu'au fond du réservoir ;

(iii)-des deuxièmes bandes souples et au moins faiblement élastiques ayant une largeur (ℓ) relativement grande sont reliées fixes, de façon étanche, par l'une de leurs extrémités latérales sur une des premières bandes susmentionnées et par l'autre de leurs extrémités latérales sur la suivante desdites premières bandes, un espace restant libre entre chacune desdites deuxièmes bandes et la paroi intérieure du réservoir, cet espace étant délimité latéralement par lesdites premières bandes reliées fixes et, éventuellement, de façon étanche, aux parois et au fond du réservoir ;

(iv) -au moins une feuille souple et au moins faiblement élastique est reliée fixe, de façon étanche, sur lesdites deuxièmes bandes reliées fixes sur les parois et sur le fond du réservoir, une liaison étanche étant réalisée pour au moins deux feuilles adjacentes, si cela s'avère nécessaire ;

(v) - lesdites espaces libres entre lesdites feuilles et la paroi sont pourvus à l'extrémité supérieure de la (des) paroi(s) du réservoir d'un joint étanche, des évents étant prévus dans ledit joint pour permettre la liaison desdits espaces libres avec l'extérieur.

La largeur (L) desdites deuxièmes bandes est au moins sur les parois et au moins sur une partie du fond du réservoir un multiple de la largeur (l) de ladite première bande.

Lesdites premières bandes sont reliées fixes et, de façon étanche, à la paroi (aux parois) intérieure(s) du réservoir et au fond du réservoir par des moyens mécaniques, tels que par clouage, rivetage et analogue ou encore lesdites premières bandes sont reliées fixes et, de façon étanche, à (aux) paroi(s) intérieure(s) du réservoir et au fond du réservoir par collage au moyen d'une colle appropriée, telle qu'une résine époxyde.

Lesdites premières bandes sont réalisées en un matériau composite comprenant au moins un ensemble constitué par une première couche en un matériau lisse et souple tel que polyéthylène, le polyvynile, le butyle et similaire, et une deuxième couche réalisée en un tissu non tissé pouvant être armé tel que des fibres en polyester, des fibres de verre ou similaire, ladite deuxième couche étant dirigée vers la paroi intérieure et le fond du réservoir.

Lesdites deuxièmes bandes sont réalisées en un matériau composite comprenant au moins un ensemble constitué par une première couche en un matériau lisse, souple et au moins faiblement élastique tel que le polyéthylène, le polyvynile, le butyle et similaire, et une deuxième couche en un tissu non tissé en fibres de polyester, fibres de verre et similaire, ledit tissu non tissé pouvant être armé avec une armature réalisée en un matériau tel qu'un grillage de verre ou un tissu tissé avec des fibres de verre; ladite première couche étant dirigée vers la(s) paroi(s) intérieure(s) et le fond du réservoir.

Les extrémités latérales desdites deuxièmes bandes sont reliées fixes et, de façon étanche, auxdites premières bandes par le soudage de ladite première couche de ladite deuxième bande sur ladite première couche de ladite première bande.

Le soudage peut être effectué, de façon connue en soi, par un système à air chaud.

La feuille susmentionnée est réalisée en un tissu feutre non tissé en fibres de polyester, fibres de verre et similaire, ledit tissu non tissé pouvant être pourvu d'une armature.

Ledit tissu non tissé est relié fixe et, de façon étanche, par collage sur ladite deuxième couche desdites deuxièmes bandes au moyen d'une résine époxyde ou analogue avec laquelle ce tissu est au moins partiellement imprégné, ledit tissu étant appliqué sur ladite deuxième couche avec une certaine pression et, éventuellement, en maintenant une température supérieure à la température ambiante jusqu'à la polymérisation au moins partielle de ladite résine.

Le mastic susmentionné est un mastic à base de silicone.

Au moins deux desdites feuilles adjacentes sont reliées par collage, de façon étanche, en ce qu'une extrémité d'une feuille est collée sur une extrémité d'une autre feuille pour former un couvre-joint simple.

Selon un autre mode de réalisation, au moins deux desdites feuilles adjacentes sont reliées, de façon étanche de manière à ce qu'une feuille pouvant avoir la forme d'une bande (ou d'un chapeau) soit collée sur les extrémités des feuilles de façon à former un couvre-joint, ladite feuille pouvant être en un tissu non tissé, éventuellement armé, qui est au moins, partiellement imprégné d'une résine époxyde.

Ladite deuxième couche de ladite deuxième bande et ladite feuille et, éventuellement, la feuille de couverture des extrémités d'au moins deux feuilles adjacentes sont réalisées dans le même tissu non tissé, dont au moins un peut être pourvu d'une armature.

Enfin, la paroi intérieure du couvercle du réservoir est également pourvu d'un garnissage.

Le procédé de garnissage intérieur d'un réservoir présente de nombreux avantages, notamment pour des réservoirs ayant un volume important et une grande superficie pour une profondeur relativement faible. Ainsi, ce procédé peut être avantageusement appliqué pour le garnissage des châteaux d'eau, des réservoirs pour le stockage de liquides corrosifs et similaires mais aussi pour le stockage de solides sous forme de granules, poudres et analogues. En effet, le procédé étant exécuté par étapes successives, il est possible de réaliser chaque étape avec le maximum d'efficacité et de précision. En outre, les matériaux utilisés pour la réalisation de chaque étape sont relativement légers et ont des dimensions relativement faibles ; en conséquence, ces matériaux sont faciles à manipuler et leur mise en place dans le réservoir peut être effectuée très rapidement, le garnissage résultant étant particulièrement fiable du point de vue résistance mécanique et étanchéité, tout en assurant que le liquide (ou solide sous forme de granules ou poudres) ne soit pas altéré et/ou détérioré. Le procédé selon l'invention peut être utilisé pour des réservoirs circulaires, ovales, carrés, rectangulaires, etc...

D'autres avantages et perfectionnements ressortiront du texte suivant et des figures y afférentes, donnés à titre d'exemple uniquement.

La fig. 1 est une coupe partielle selon la ligne X - X de la figure 2; elle montre, de façon schématique, la paroi d'un réservoir en béton pourvu d'un garnissage intérieur conforme à l'invention;

La figure 2 est une coupe partielle verticale du même réservoir à une autre échelle ;

La figure 3a montre, de façon schématique, un réservoir circulaire pourvu d'un garnissage intérieur, et

La figure 3b montre en coupe, de façon schématique, un réservoir rectangulaire (ou carré) pourvu d'un garnissage intérieur.

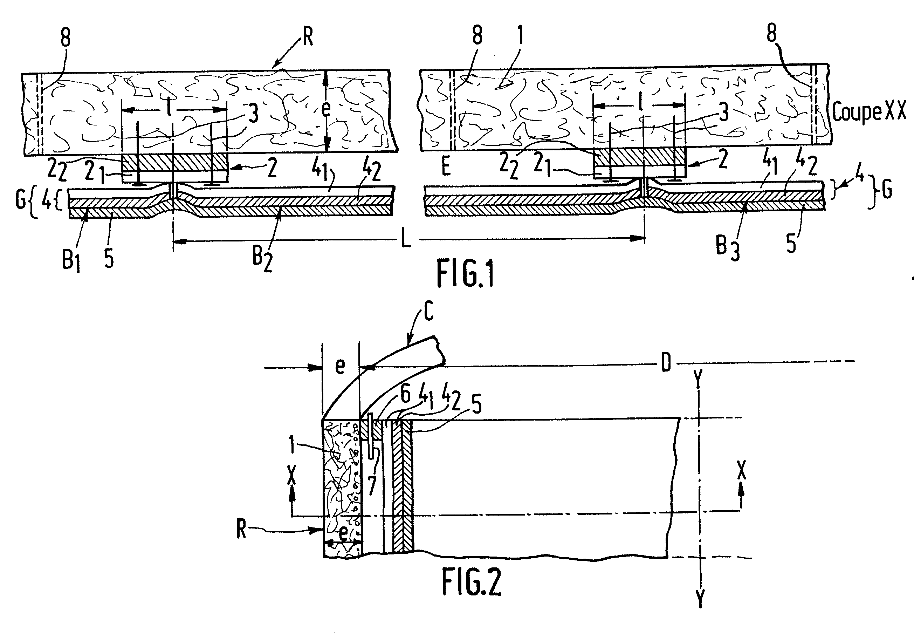

Le réservoir (R) montré dans les figures 1 et 2 a une paroi (1) en béton ou similaire ayant une épaisseur (e). Eventuellement, des perçages (8) pouvant être prévus dans la paroi (1) pour mettre en relation l'espace (E) libre avec l'atmosphère ambiante, comme il sera précisé ci-après. Des bandes (2) sont reliées fixes et de façon étanche sur la paroi (1) à des distances sensiblement égales (L) entre elles. Cette distance (L) est choisie en fonction des dimensions du réservoir. En général, elle varie entre 1m,30 et 2m,10. Les bandes (2) ont une largeur (l) relativement faible de l'ordre de 0m,10 à 0m,15, en fonction des dimensions du réservoir et donc de la distance (L). Les bandes montrées dans les figures 1 et 2 sont réalisées en un matériau composite comportant une première couche ($2_1$) en un matériau lisse et souple tel que le polyéthylène, le polyvynile, le butyle, etc..., et d'une deuxième couche ($2_2$) en un tissu non tissé, par exemple, ou encore réalisée par des fibres floquées, par exemple électrostatiquement, sur la première couche ($2_1$), cette deuxième couche pouvant être pourvue d'une armature sous forme d'une grille ou d'un tissu en fibres de verre, par exemple. Le tissu non tissé est en un matériau ayant la configuration générale d'un feutre et peut être réalisé au moyen de fibres naturelles ou artificielles, telles que des fibres en polyester, en verre, et similaires. Les bandes (2) sont reliées fixes et, éventuellement, de façon étanche, sur la paroi (1) par des moyens mécaniques tels que des clous (3), la couche en tissu non tissé étant dirigée vers la paroi (1). Il est évident que d'autres moyens mécaniques tels que vis ou rivets peuvent être utilisés. Les bandes (2) peuvent également être appliquées sur la paroi (1) par collage au moyen d'une résine époxyde, par exemple, la couche du tissu non tissé étant alors imprégnée avec la résine.

Des bandes (4) ayant une largeur sensiblement égale à la distance (L) sont ensuite tendues entre deux bandes (2) successives, comme c'est montré dans la figure 1. Chaque bande (4) s'étend du centre de la bande (2) jusqu'au centre de la bande (2) suivante. Un espace libre (E) subsiste entre la bande (4) et la face intérieure de la paroi (1) du réservoir (R). Cet espace (E) est rempli d'air lorsque le réservoir (R) est vide. La bande (4) est réalisée en un matériau composite comportant une première couche (4₁) en un matériau souple et lisse et faiblement élastique tel que le polyéthylène, le polyvynile, le butyle ou analogue, qui peut, par exemple, être le même matériau que celui de la couche (2₁) des bandes (2). Cette couche (4₁) est dirigée vers la face intérieure de la paroi (1). Cette bande (4) comporte, comme c'est montré sur la figure 1 une deuxième couche (4₂) en un tissu non tissé ayant la configuration générale d'un feutre, cette couche (4₂) pouvant être pourvue d'une armature sous forme d'une grille ou d'un tissu tissé en fibres de verre, par exemple. Le tissu non tissé qui constitue la couche (4₂) peut être en fibres de polyester, fibres de verre et similaire ou encore en fibres de textile naturel. Les extrémités des bandes (4) sont reliées fixes et, en général, de façon étanche, aux bandes (2) et, plus particulièrement, la couche (4₁) des bandes (4) aux couches (2₁) des bandes (2) par soudage à l'air chaud, de préférence. Les extrémités des bandes (4) successives (B₁, B₂, B₃) peuvent être en contact, ou encore elles peuvent être légèrement distantes l'une de l'autre. Une feuille (5) est appliquée sur l'ensemble des bandes (4). Cette feuille est en un tissu non tissé pouvant être pourvu d'une armature. De préférence, cette feuille est réalisée dans le même matériau que la couche (4₂) des bandes (4). L'application de la feuille (5) sur les bandes (4) est effectuée par collage par exemple au moyen d'une résine époxyde, avec laquelle la feuille (5) et, éventuellement, la couche (4₂) sont au moins partiellement imprégnées. La feuille est alors appliquée sous une pression exercée directement ou indirectement et, éventuellement, en faisant régner une température supérieure à la température ambiante, jusqu'à la polymérisation au moins partielle de la résine. L'ensemble constitué par les bandes (4) et la feuille (5) constitue le garnissage étanche et résistant (G) du réservoir (1). A l'extrémité supérieure du réservoir (voir figure 2) les espaces libres (E) entre les bandes (4) et la face intérieure de la paroi (1) du réservoir (R) sont scellés au moyen d'un mastic (6), par exemple à base de silicone. Des évents (7) sont prévus pour chaque espace (E) - qui communique, en outre, directement avec des espaces libres entre les bandes (4) et le fond du réservoir (non montré dans les figures) - de façon à ce que l'air contenu dans ces espaces (E) puisse s'échapper, lorsque le réservoir est rempli avec un liquide ou un solide pulvérulent, granuleux ou analogue. Le garnissage (4,5) est alors appliqué directement sur la face intérieure de la paroi (1) et le fond du réservoir. Au fur et à mesure que le réservoir (R) se vide, l'air est admis à nouveau dans les espaces (E) par les évents (7). Dans certains cas, il peut être avantageux de prévoir des évents (8) réalisés sous forme de perçages au moins dans la partie supérieure de la paroi (1) du réservoir, ces évents (8) étant bouchés par des moyens appropriés lorsque le réservoir est plein. Le réservoir peut être pourvu d'un couvercle (C) dont la paroi intérieure peut également être pourvue d'un garnissage intérieur réalisé selon le procédé conforme à la présente invention, par exemple. Toutefois, d'autres procédés de garnissage peuvent être utilisés pour le couvercle (C) sans pour autant sortir du cadre de l'invention.

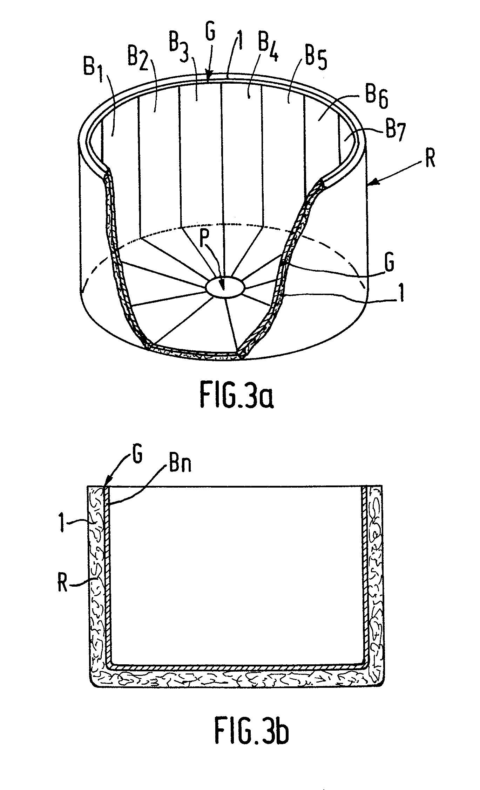

Dans le cas d'un réservoir (R) circulaire ou ovale (voir fig. 3a), les bandes (B$_1$, B$_2$, B$_3$ ....... B$_n$) sont continues sur le fond du réservoir , tout en diminuant en largeur (L), jusqu'au centre du fond du réservoir (R). Pour rendre totalement étanche, cette partie centrale du fond du réservoir, un chapeau (P) est appliqué, par exemple par collage d'un tissu non tissé pouvant être pourvu d'une armature, ledit tissu étant imprégné d'une résine époxyde, par exemple. D'autres modes d'étanchéisation du centre du fond du réservoir peuvent être imaginés sans sortir du cadre de l'invention.

Dans le cas d'un réservoir (R) rectangulaire ou carré (voir figure 3b), les bandes (B$_1$, B$_2$ ....... B$_n$) et la feuille (5) du garnissage (G) sont appliquées en continu sur une paroi, le fond et la paroi opposée du réservoir (R), tandis que le garnissage (G) n'est appliqué que sur les deux autres parois du réservoir. La liaison, à l'extrêmité inférieure de ces parois, entre le garnissage discontinu et le garnissage continu sur le fond du réservoir peut être réalisé par collage d'un (ou des) cornières réalisées en un tissu non tissé pouvant être pourvu d'une armature, ou selon tout autre procédé désiré.

De nombreuses modifications et perfectionnements peuvent être imaginés sans pour autant sortir du cadre de l'invention. Ainsi, le fond du réservoir peut être convexe ou concave, continu ou discontinu, le réservoir peut avoir la section d'un polygone quelconque, les parois peuvent être verticales ou inclinées, etc...: le procédé selon l'invention peut toujours être exécuté avec d'excellents résultats.

REVENDICATIONS

1.) - Procédé de garnissage intérieur d'un réservoir pouvant comporter un couvercle, caractérisé en ce qu'il comprend les étapes suivantes :

(i) - facultativement, la (ou les) paroi(s) intérieur (es) et le fond du réservoir sont au moins partiellement nettoyés ;

(ii) - des premières bandes ayant une largeur (ℓ) relativement faible sont reliées fixes et, éventuellement, de façon étanche, à la paroi intérieure, - dans le cas d'un réservoir ovale ou circulaire, - à des distances sensiblement égales, ainsi qu'au fond du réservoir où lesdites bandes convergent radialement vers le centre dudit fond; et , - dans le cas d'un réservoir rectangulaire ou carré, lesdites premières bandes sont reliées fixes en continu sur deux parois opposées et sur le fond à des distances sensiblement égales, et sur les deux autres parois opposées à des distances sensiblement égales de l'extrémité supérieure du réservoir jusqu'au fond du réservoir ;

(iii) - des deuxièmes bandes souples et au moins faiblement élastiques ayant une largeur (L) relativement grande sont reliées fixes, de façon étanche, par l'une de leurs extrémités latérales sur une des premières bandes susmentionnées et par l'autre de leurs extrémités latérales sur la suivante desdites premières bandes, un espace restant libre entre chacune desdites deuxièmes bandes et la paroi intérieure du réservoir, cet espace étant délimité latéralement par lesdites premières bandes reliées fixes et, éventuellement, de façon étanche, aux parois et au fond du réservoir ; (iv) - au moins une feuille souple et au moins faiblement élastique est reliée fixe, de façon étanche, sur lesdites deuxièmes bandes reliées fixes sur les parois et sur le fond du réservoir, une liaison étanche étant réalisée pour au moins deux feuilles adjacentes, si cela s'avère nécessaire ;

(v) - lesdits espaces libres entre lesdites feuilles et la paroi sont pourvus à l'extrémité supérieure de la (des) paroi(s) du réservoir d'un joint étanche, des évents étant prévus dans ledit joint pour permettre la liaison desdits espaces libres avec l'extérieur.

2.) - Procédé selon la revendication 1, caractérisé en ce que la largeur (L) desdites deuxièmes bandes est au moins sur les parois et au moins sur une partie du fond du réservoir un multiple de la largeur (ℓ) de ladite première bande.

3.) - Procédé selon l'une des revendications 1 ou 2, caractérisé en ce que lesdites premières bandes sont reliées fixes, de façon étanche à la paroi (aux parois) intérieure(s) du réservoir et au fond du réservoir par des moyens mécaniques, tels que par clouage, rivetage et analogue.

4.) - Procédé selon l'une des revendications 1 ou 2, caractérisé en ce que lesdites premières bandes sont reliées fixes et, de façon étanche, à (aux) paroi(s) intérieure(s) du réservoir et au fond du réservoir par collage au moyen d'une colle appropriée, telle qu'une résine époxyde.

5.) - Procédé selon l'une des revendications précédentes, caractérisé en ce que lesdites premières bandes sont réalisées en un matériau composite comprenant au moins un ensemble constitué par une première couche en un matériau lisse et souple tel que le polyéthylène, le polyvynile, le butyle et similaire, et une deuxième couche réalisée en un tissu non tissé pouvant être armé tel que des fibres en polyester, des fibres de verre ou similaire, ladite deuxième couche étant dirigée vers la paroi intérieure et le fond du réservoir.

6.) - Procédé selon l'une des revendications précédentes, caractérisé en ce que lesdites deuxièmes bandes sont réalisées en un matériau composite comprenant au moins un ensemble constitué par une première couche en un matériau lisse, souple et au moins faiblement élastique tel que le polyéthylène, le polyvynile, le butyle et similaire, et une deuxième couche en un tissu non tissé en fibres de polyester, fibres de verre et similaire, ledit tissu non tissé pouvant être armé avec une armature réalisée en un matériau tel qu'un grillage de verre ou un tissu tissé avec des fibres de verre; ladite première couche étant dirigée vers la (les) paroi(s) intérieure(s) et le fond du réservoir.

7.) - Procédé selon la revendication 6, caractérisé en ce que les extrémités latérales desdites deuxièmes bandes sont reliées fixes et, de façon étanche, auxdites premières bandes par le soudage de ladite première couche de ladite deuxième bande sur ladite première couche de ladite première bande.

8.) - Procédé selon la revendication 7, caractérisé en ce que le soudage est effectué, de façon connue en soi, par un système à air chaud.

9.) - Procédé selon l'une des revendications précédentes, caractérisé en ce que la feuille susmentionnée est réalisée en un tissu feutre non tissé en fibres de polyester, fibres de verre et similaire, ledit tissu non tissé pouvant être pourvu d'une armature.

10.) - Procédé selon la revendication 9, caractérisé en ce que ledit tissu non tissé est relié fixe et de façon étanche par collage sur ladite deuxième couche desdites deuxièmes bandes au moyen d'une résine époxyde ou analogue avec laquelle ce tissu est au moins partiellement imprégné, ledit tissu étant appliqué sur ladite deuxième couche avec une certaine pression et, éventuellement, en maintenant une température supérieure à

à la température ambiante jusqu'à la polymérisation au moins partielle de ladite résine.

11.) - Procédé selon l'une des revendications précédentes, caractérisé en ce que le mastic susmentionné est un mastic à base de silicone.

12.) - Procédé selon l'une des revendications 1 à 11, caractérisé en ce qu'au moins deux desdites feuilles adjacentes sont reliées par collage, de façon étanche, en ce qu'une extrémité d'une feuille est collée sur une extrémité d'une autre feuille pour former un couvre-joint simple.

13.) - Procédé selon l'une des revendications 1 à 11, caractérisé en ce qu'au moins deux desdites feuilles adjacentes sont reliées, de façon étanche, de manière en ce qu'une feuille pouvant avoir la forme d'une bande (ou d'un chapeau) est collée sur les extrémités des feuilles de façon à former un couvre-joint, ladite feuille pouvant être en un tissu non tissé, éventuellement armé, qui est au moins partiellement imprégné d'une résine époxyde.

14.) - Procédé selon l'une des revendications précédentes, caractérisé en ce que ladite deuxième couche de ladite deuxième bande et ladite feuille et, éventuellement, la feuille de couverture des extrémités d'au moins deux feuilles adjacentes sont réalisées dans le même tissu non tissé, dont au moins un peut être pourvu d'une armature.

15.) - Procédé selon l'une des revendications précédentes, caractérisé en ce que la largeur desdites premières bandes est de 0m,10 à 0m,15, en fonction des dimensions du réservoir.

16.) - Procédé selon l'une des revendications précédentes, caractérisé en ce que la largeur desdites deuxièmes bandes est au moins pour les parois du réservoir de 1m,30 à 2m,10, en fonction des dimensions du réservoir.

17.) - Procédé selon l'une des revendications précédentes, caractérisé en ce que la paroi intérieure du couvercle du réservoir est également pourvu d'un garnissage.

18.) - Réservoirs pourvus d'un garnissage étanche caractérisé en ce qu'il est réalisé selon le procédé décrit dans les revendications 1 à 17.

FIG.1

FIG.2

0115732

FIG.3a

FIG.3b